# EUROPÄISCHE PATENTSCHRIFT

(11) **EP 0 596 333 B1**
(45) Veröffentlichungstag und Bekanntmachung des Hinweises auf die Patenterteilung: **19.03.1997**
(21) Anmeldenummer: 93117019.5
(22) Anmeldetag: 21.10.1993
(51) Int. Cl.: B01D 29/15, B01D 29/44, B01D 29/52, B01D 29/72, B01D 29/84, B01D 29/90, B01D 29/92

(54) **Kerzendruckfilter**
Candle pressure filter
Bougie filtrante à pression

(30) Priorität: 03.11.1992 DE 4237027
(43) Veröffentlichungstag der Anmeldung: 11.05.1994
(73) Patentinhaber: Boll & Kirch Filterbau GmbH, D-50170 Kerpen (DE)
(72) Erfinder: Lennartz,Hans Rüdiger, Dipl.-Ing., D-50259 Pulheim (DE); Ungewitter, Falk, D-40668 Meerbusch (DE)
(74) Vertreter: Vollbach, Hans, Dipl.-Ing.

(56) Entgegenhaltungen:
- DE-A- 1 461 510
- GB-A- 2 026 885
- US-A- 3 422 958
- US-A- 3 482 700

## Beschreibung

Die Erfindung betrifft einen Kerzendruckfilter für die Flüssigkeitsfiltrierung, insbesondere für Kühlschmiermittel u.dgl., mit einer das Filtergehäuse in einen unteren, den Filtereinlaß aufweisenden Trüberaum und einen oberen, den Filterauslaß aufweisenden Filtratraum trennenden, elastisch gelagerten Trennwandplatte, an der die Filterkerzen mit ihren oberen Enden hängend angeschlossen sind, mit einem Druckgasanschluß zum Einleiten eines den Filterkuchen an den Filterkerzen trocknenden Druckgases, mit einer am Boden des Filtergehäuses angeordneten, durch eine Absperrklappe verschließbaren Austragsöffnung für den getrockneten Filterkuchen, und mit einer am Kopf des Filtergehäuses angeordneten, eine Gehäusedurchführung durchfassenden Klopfvorrichtung zum Ablösen des getrockneten Filterkuchens von den Filterkerzen, die aus einem von einem Klopfantrieb betätigten, gegen die Trennwandplatte wirkenden Klopfer besteht.

Ein Kerzenfilter dieser Ausführung mit Trockenaustrag des Filterkuchens ist z.B. aus der DE-A-28 28 976 bekannt. Bei diesen als Anschwemmfilter arbeitenden Filtergerät wird der auf den Filterkerzen abgelagerte Filterkuchen durch Druckgaseinleitung z.B. auf eine Restfeuchte von etwa 50% getrocknet und anschließend mit Hilfe der Klopfvorrichtung von den aus Spaltfilterelementen bestehenden Filterkerzen abgeklopft und durch die Austragsöffnung am Boden des Filtergehäuses ausgetragen. Der Stößel der Klopfvorrichtung ist unter Abdichtung durch die Gehäusedurchführung am Kopf des Filtergehäuses hindurchgeführt und mit der Trennwandplatte gekoppelt. Um ein Lösen des getrockneten Filterkuchens von den Filterkerzen zu erreichen, muß mit kräftigen Schlagimpulsen der Klopfvorrichtung gearbeitet werden, die zu starken Geräuschbelästigungen und zu Schwingungen und Stoßbeanspruchungen im System führen. Um eine Übertragung der Stöße in die Anlagenteile und das Gebäude zu vermeiden, müssen die Filterapparate auf elastische Schwingungsdämpfer gesetzt werden.

Aufgabe der Erfindung ist es daher, einen Kerzendruckfilter der eingangs genannten Art mit Bauvereinfachungen so auszubilden, daß er auch bei höheren Betriebsdrücken, die in der Größenordnung von 8 bis 10 bar oder sogar darüber liegen können, und demgemäß bei erhöhten Filterflächenbelastungen bzw. Strömungsgeschwindigkeiten der Trübe störungsfrei arbeitet.

Diese Aufgabe wird erfindungsgemäß dadurch gelöst, daß der Klopfer als ein vom Betriebsdruck im Filtergehäuse in Schließrichtung beaufschlagtes, die Gehäusedurchführung am Kopf des Filtergehäuses verschließendes Verschlußorgan ausgebildet ist, wobei er in seiner Schließlage von der Trennwandplatte abgehoben ist.

Bei dieser Ausgestaltung des Kerzendruckfilters kann auf die Verwendung aufwendiger Verschleißteile an der Klopfvorrichtung und ihrer Durchführung am Filtergehäuse, wie vor allem auf die Verwendung von Stößeldichtungen und Stößelführungen u.dgl., verzichtet werden, da der Klopfer zugleich ein die Gehäusedurchführung verschließendes Verschlußorgan bildet, das durch den Betriebsdruck im Filter auch bei Druckschwankungen zuverlässig in seiner angehobenen Schließlage gehalten wird. Damit ergibt sich insoweit eine vereinfachte und auch wartungsarme Bauausführung des Kerzendruckfilters. Besondere Vorteile ergeben sich, wenn das Filtergehäuse als Druckgehäuse für einen Mindest-Betriebsdruck von 8 bis 10 bar ausgeführt wird. Bei diesen erhöhten Betriebsdrücken ist eine sichere Abdichtung des Filtratraumes an der Gehäusedurchführung im Bereich der Klopfvorrichtung jederzeit gewährleistet. Zugleich ergibt sich der Vorteil, daß das den Kerzendruckfilter verlassende Filtrat unmittelbar in den Arbeitskreislauf zurückgeführt werden kann. Der Kerzendruckfilter arbeitet bei den erhöhten Betriebsdrücken mit entsprechend großen Durchströmgeschwindigkeiten und demgemäß auch mit hohen Filterleistungen, wodurch auch der Filterkuchenaufbau an den Filterkerzen begünstigt wird.

In weiterer vorteilhafter Ausgestaltung der Erfindung ist an der Unterseite der die Filterkerzen tragenden Trennwandplatte eine diese am Umfang gegen eine Sitzfläche des Filtergehäuses dichtend anstellende Federvorrichtung angeordnet, die zweckmäßig aus in Umfangsabständen zueinander angeordneten, an der Innenseite des Filtergehäuses abgestützten Federelementen, vorzugsweise in Gestalt von Federstößeln od.dgl., besteht. Die Trennwandplatte stützt sich zweckmäßig mittels eines an ihr angeordneten O-Ringes an der konischen Sitzfläche des Filtergehäuses ab. Ferner empfiehlt es sich, an der Unterseite des Klopfers einen nachgiebigen Belag, vorzugsweise in Gestalt einer Gummi- oder Kunststoffplatte od.dgl., anzuordnen. Die vorgenannten Gestaltungsmaßnahmen dämpfen die beim Abklopfen der Filterkuchen auftretenden Stöße und Schwingungen unmittelbar im Filtergehäuse, so daß eine starre Lagerung des Filterapparates möglich ist, auf die Verwendung von Schwingungsdämpfern an der Verlagerung des Filterapparates also verzichtet werden kann.

Der z.B. aus einem zylindrischen Klopfgewicht bestehende Klopfer weist zweckmäßig an seiner Oberseite einen Dichtring auf, mit dem er sich gegen eine die Gehäusedurchführung umschließende Sitzfläche am Kopf des Filtergehäuses dichtend anlegt. Für den Klopfantrieb lassen sich unterschiedliche Vorrichtungen verwenden. Vorzugsweise findet hierfür ein Druckluftzylinder Verwendung, mit dessen die Gehäusedurchführung frei durchgreifender Kolbenstange der Klopfer verbunden ist.

Der Verzicht auf aufwendige Stößeldichtungen und Stößelführungen an der Gehäusedurchführung für die Klopfvorrichtung bietet in vorteilhafter Weise die Möglichkeit, das Kopfteil des Filtergehäuses aus einem den Filtratraum mit dem Filterauslaß und der Gehäusedurchführung für die Klopfvorrichtung sowie die Sitzfläche für die Trennwandplatte einschließenden einteiligen Gußteil herzustellen, wodurch sich ebenfalls Bauvereinfachungen ergeben. Dabei kann die Druckgaszuführung aus einer unterhalb der genannten Sitzfläche angeordneten, die auf der Sitzfläche liegende Trennwandplatte umschließenden Gehäusewand-Ringnut bestehen, die über eine Anschlußbohrung an den äußeren Druckgasanschluß angeschlossen ist. Auch hiermit ergeben sich Bauvereinfachungen, da eine gesonderte Ringleitung für die Zuführung des der Filterkuchentrocknung dienenden Druckgases (Druckluft) entfällt. Diese Aufgabe übernimmt der im Gußteil ausgeformte, von der Ringnut gebildete Ringkanal.

Für die Filterkerzen können, wie bekannt, Spaltfilterelemente oder aber auch Filterelemente mit Filtergeweben u.dgl. verwendet werden, die auf einem oder auch auf mehreren konzentrischen Teilkreisen in Umfangsabständen zueinander an der Trennwandplatte hängend angeschlossen werden. Um die inneren Druckverluste möglichst gering zu halten, sollten die Filterkerzen, bezogen auf ihren Durchmesser, eine vergleichsweise kurze Länge aufweisen, die zweckmäßig höchstens das acht- bis zehnfache des Filterkerzendurchmessers beträgt. Mit dieser Maßnahme wird auch das Abklopfen des getrockneten Filterkuchens von den Filterkerzen erleichtert. In den Filterkerzen können, wie bekannt, Steigrohre angeordnet werden. Dabei empfiehlt es sich, den Durchmesser der Steigrohre so zu bemessen, daß der Strömungsquerschnitt des zwischen der Filterkerze und dem Steigrohr liegenden Ringspaltes zumindest angenähert dem inneren Strömungsquerschnitt des Steigrohres entspricht.

Je nach Einsatz des erfindungsgemäßen Kerzendruckfilters stellt sich an den Filterkerzen ein Filterkuchen ein, der beim Abklopfen nicht auseinanderfällt, sondern als zusammenhängender schlauchförmiger Filterkuchenstrumpf von den Filterkerzen abfällt. Dies gilt in besonderem Maße dann, wenn der Kerzendruckfilter mit verhältnismäßig hohen Betriebsdrücken arbeitet und/oder für die Filterung von Flüssigkeiten, wie z.B. Kühlschmiermittel, Emulsionen u.dgl., eingesetzt wird, die Metallspäne von Werkzeugmaschinen u.dgl. enthalten, welche zu einer starken Verharkung neigen. Um hier einen einwandfreien Austrag des getrockneten Filterkuchens zu erreichen und Verstopfungen im Austragsbereich des Filters zu vermeiden, wird die Anordnung erfindungsgemäß so getroffen, daß die unteren Enden der Filterkerzen sich in einem Abstand zu der Austragsöffnung des Filtergehäuses befinden, der mindestens etwa gleich der Länge der Filterkerzen ist. Die beim Abklopfen von den Filterkerzen abrutschenden Filterkuchenstrümpfe haben daher im Filtergehäuse genügend Bewegungsfreiheit, um ohne gegenseitige Beeinflussung im Trüberaum nach unten zu gleiten und über die möglichst große Austragsöffnung am Boden des Filtergehäuses auszutreten. Besonders vorteilhaft ist es auch, wenn die genannte Austragsöffnung unter einem spitzen Winkel zur Filtergehäuseachse geneigt angeordnet wird. Durch die Schrägstellung der Austragsöffnung wird beim Entleeren des Filtergehäuses, was durch die Einleitung des den Filterkuchen trocknenden Druckgases erfolgt, eine vollständige Restentleerung gewährleistet. Es empfiehlt sich im übrigen, das Filtergehäuse so auszubilden, daß es sich zur bodenseitigen Austragsöffnung und zu der hier befindlichen Absperrklappe hin konisch verjüngt, wobei die Absperrklappe zweckmäßig in einem zylindrischen Teil der Austragsöffnung um eine mittlere Schwenkachse schwenkbar gelagert wird. Das die Austragsöffnung und den Filtereinlaß bildende Fußteil des Filtergehäuses wird zweckmäßig ebenfalls als einstückiges Gußteil ausgeführt. Dies ermöglicht auch eine gute Nutzung des vorhandenen Austragsquerschnittes.

Mit der Erfindung wird insgesamt ein Kerzendruckfilter geschaffen, der sich durch vergleichsweise einfache, verschleiß- und wartungsarme Baugestaltung auszeichnet und der sich mit besonderem Vorteil auch bei vergleichsweise hohen Betriebsdrücken und auch ohne die Verwendung der bei den bekannten Anschwemmfiltern üblichen Filterhilfsmittel einsetzen läßt, wobei ein sicherer Austrag des auf eine Restfeuchte getrockneten Filterkuchens gewährleistet ist.

Die Erfindung wird nachfolgend im Zusammenhang mit dem in der Zeichnung gezeigten Ausführungsbeispiel näher erläutert. In der Zeichnung zeigen:
- Fig. 1: einen erfindungsgemäßen Kerzendruckfilter im Vertikalschnitt;
- Fig. 2: den Kerzendruckfilter nach Fig. 1 in einem Horizontalschnitt;
- Fig. 3: einen Teilschnitt nach Linie III-III der Fig. 1.

Der dargestellte Kerzendruckfilter für die Flüssigkeitsfiltrierung weist ein zylindrisches Filtergehäuse 1 mit einem unteren Fußteil 2 und einem oberen Kopfteil 3 auf, wobei das Fußteil 2 und das Kopfteil 3 z.B. durch Flanschverschraubung mit dem zylindrischen Gehäuseteil des Filtergehäuses lösbar verbunden ist und vorzugsweise jeweils aus einem Gußteil besteht.

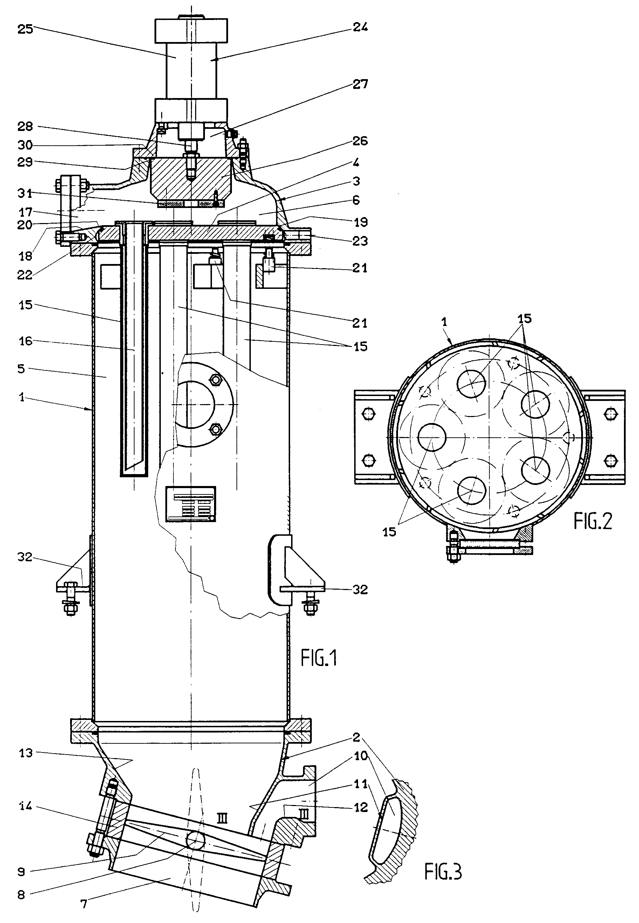

Eine im oberen Bereich des Filtergehäuses angeordnete Trennwandplatte 4 unterteilt den Innenraum des Filtergehäuses 1 in einen unteren Trüberaum 5 und einen oberen Filtratraum 6. Das Filtergehäuse 1 weist am Boden eine im Querschnitt groß bemessene Austragsöffnung 7 für den Filterkuchenaustrag mit einer um eine mittlere Schwenkachse 8 schwenkbaren Absperrklappe 9 auf, die im schließzustand die Austragsöffnung 7 verschließt. Unmittelbar oberhalb der Absperrklappe 9 ist am Fußteil 2 der Filtereinlaß 10 für die Zuführung der Trübe bzw. der Schmutzflüssigkeit in den Trüberaum 5 angeordnet. Die zugeführte Schmutzflüssigkeit wird über ein angegossenes schräggestelltes Wandungsteil 11 gegen die geschlossene Absperrklappe 9 gerichtet in den Trüberaum 5 eingeführt. Fig. 1 läßt erkennen, daß die Austragsöffnung 7 unter einem spitzen Winkel zur Filtergehäuseachse geneigt ist. Durch diese Schrägstellung des Filterkuchenaustrages wird beim Entleeren des Filters eine vollständige Restentleerung gewährleistet. Der unmittelbar über der Absperrklappe 9 angeordnete und gegen die Absperrklappe gerichtete Filtereinlaß 10 weist in seinem unteren Bereich eine angegossene Buckelauswölbung 12 auf, die verhindert, daß beim Herausdrücken der Flüssigkeit aus dem Filtergehäuse durch Druckgaseinleitung die Flüssigkeit vom Filtereinlaß zur Austragsöffnung 7 hin zurückfließen kann und damit den getrockneten Filterkuchen anfeuchtet. Außerdem zeigt Fig. 1, daß sich das Filtergehäuse im Bodenbereich zu der Austragsöffnung 7 hin bei 13 konisch verjüngt, und daß die Absperrklappe 9 in einem zylindrischen Teil 14 der Austragsöffnung um die mittlere Schwenkachse 8 schwenkbar gelagert ist.

An der Trennwandplatte 4 sind die einzelnen Filterkerzen 15 mit ihren oberen Enden hängend angeschlossen, so daß sie nach unten in den Trüberaum 5 eintauchen. Wie Fig. 2 zeigt, sind die Filterkerzen 15 in gleichmäßigen Umfangsabständen zueinander auf einem gemeinsamen Teilkreis der Trennwandplatte 4 angeordnet, wobei der Umfangsabstand der Filterkerzen die Dicke der auf diesen abzulagernden Filterkuchen bestimmt. Es können auch Filterkerzen auf mehreren konzentrischen Teilkreisen vorgesehen werden, wenn entsprechend hohe Filterleistungen gefordert werden. Die Filterkerzen 15 bestehen vorzugsweise aus Spaltfilterelementen, können aber auch z.B. mit einem Filtergewebe belegt sein. Wie bekannt, befindet sich in jeder Filterkerze 15 ein Steigrohr 16, über das das Filtrat in den oberen Filtratraum 6 abgeleitet wird. Der Innenquerschnitt der Steigrohre 16 entspricht zweckmäßig zumindest angenähert dem ringförmigen Durchflußquerschnitt zwischen Steigrohr und Filterkerze, so daß Druckverluste möglichst klein gehalten werden. Aus dem gleichen Grund weisen die Filterkerzen 15 zweckmäßig eine verhältnismäßig kurze Länge auf, die vorzugsweise höchstens das Acht- bis Zehnfache ihres Durchmessers beträgt. Wie Fig. 1 zeigt, ist unterhalb der Filterkerzen 15 im Filtergehäuse 1 ein verhältnismäßig großer Freiraum angeordnet. Die unteren Enden der Filterkerzen 15 befinden sich in einem Abstand oberhalb der Austragsöffnung 7, der mindestens gleich der Filterkerzenlänge ist. Hierdurch wird der Filterkuchenaustrag insbesondere dann begünstigt, wenn der Filterkuchen als zusammenhängender schlauchförmiger Filterkuchenstrumpf von den Filterkerzen 15 abrutscht und in den Kuchenaustrag gelangt.

Der Filterauslaß 17, über den das Filtrat aus der Filtratkammer 6 abgeführt wird, befindet sich an dem gegossenen Kopfteil 3 unmittelbar oberhalb der Trennwandplatte 4. Wie Fig. 1 zeigt, weist der Filterauslaß 17 im unteren Bereich eine nach außen geneigte Abschrägung 18 auf, so daß der Filterauslaß an seiner Unterseite tiefer liegt als die Oberseite der sich in Schließlage befindenden Trennwandplatte 4. Mit dieser Maßnahme wird bei der Entleerung des Filtergehäuses ein Rücklauf des Filtrats in das Filtergehäuse verhindert.

An dem Kopfteil 3 des Filtergehäuses 1 ist eine ringförmige, nach Art einer konischen Ventilsitzfläche ausgebildete Sitzfläche 19 angegossen, gegen die sich die Trennwandplatte 4 mit einer entsprechenden konischen umlaufenden Ringfläche mit einem hier angeordneten O-Ring 20 legt. An der Unterseite der Trennwandplatte 4 ist eine diese gegen die Sitzfläche 19 des Filtergehäuses dichtend anstellende Federvorrichtung angeordnet. Diese besteht aus in Umfangsabständen zueinander angeordneten, an der Innenseite des Filtergehäuses 1 abgestützten Federelementen 21 in Gestalt von Federstößeln, die von unten gegen die Trennwandplatte 4 wirken und diese somit in Schließrichtung beaufschlagen.

Für die Trocknung des an den Filterkerzen 15 abgelagerten Filterkuchens wird in bekannter Weise Druckgas, im allgemeinen Druckluft, im oberen Bereich in den Trüberaum 5 eingeleitet. Die Druckgaszuführung besteht aus einer unterhalb der Sitzfläche 19 angeordneten Gehäusewand-Ringnut 22, die die auf der Sitzfläche 19 liegende Trennwandplatte 4 umschließt und mit dieser einen Ringkanal für die Druckgaszuleitung bildet, wobei die Ringnut über eine radiale Anschlußbohrung 23 an die äußere Druckgaszuleitung angeschlossen ist.

Es ist erkennbar, daß das als einteiliges Gußstück ausgebildete Kopfteil 3 den Filtratraum 6 bildet und in einem Stück den Filterauslaß 17 sowie die Sitzfläche 19 für die Trennwandplatte 4 und auch den Druckgasanschluß mit der den Ringkanal bildenden Ringnut einschließt. Auf dem Kopfteil 3 befindet sich die Klopfvorrichtung 24, mit deren Hilfe der an den Filterkerzen 15 durch das Druckgas (Druckluft) getrocknete Filterkuchen von den Filterkerzen abgeklopft und bei geöffneter Absperrklappe 9 über die Austragsöffnung 7 ausgetragen wird. Die Klopfvorrichtung 24 besteht aus einem mittig auf dem Kopfteil 3 befestigten Klopfantrieb 25 und einem im Filtratraum 6 angeordneten, z.B. von einem zylindrischen Klopfgewicht gebildeten Klopfer 26, der mit dem Klopfantrieb 25 gekoppelt ist. Das Filtergehäuse 1 weist an seinem Kopf bzw. an dem gegossenen Kopfteil 3 mittig eine verhältnismäßig große Gehäusedurchführung 27 für den Durchgriff des den Klopfantrieb 25 mit dem Klopfer 26 verbindenden Stößels 28 od.dgl. auf. Vorzugsweise besteht der Klopfantrieb 25 aus einem Druckluftzylinder, mit dessen den Stößel 28 bildender Kolbenstange der Klopfer 26 verbunden ist.

Der Klopfer 26 bildet zugleich ein die Gehäusedurchführung 27 und damit den Filtratraum 6 nach außen verschließendes Verschlußorgan. Er wird vom Betriebsdruck im Filtergehäuse 1 bzw. dessen Filtratraum 6 nach Art eines Kolbens in Schließrichtung beaufschlagt, wobei er in der in Fig. 1 gezeigten Schließlage von der darunterliegenden Trennwandplatte 4 abgehoben ist. Der Klopfer weist an seiner Oberseite einen Dichtring 29 auf, mit dem er sich in der Dichtlage gegen eine die Gehäusedurchführung 27 an der Unterseite umschließende ringförmige Sitzfläche 30 dichtend anlegt, wodurch die Gehäusedurchführung 27 verschlossen wird. Außerdem zeigt Fig. 1, daß der Klopfer 26 an seiner Unterseite einen nachgiebigen Belag 31 trägt, der zweckmäßig aus einer Gummi- oder Kunststoffscheibe od.dgl. besteht.

Das Filtergehäuse ist zweckmäßig als druckdichtes Gehäuse für einen Mindest-Betriebsdruck von etwa 8 bis 10 bar ausgeführt.

Die Arbeitsweise des beschriebenen Kerzendruckfilters ist bekannt. Im Filterbetrieb wird die Schmutzflüssigkeit bei geschlossener Absperrklappe 9 über den Filtereinlaß 10 unten in das Filtergehäuse 1 eingeführt. Sie durchströmt im Trüberaum 5 die Filterkerzen 15, an der die Schmutzstoffe als Filterkuchen abgelagert werden. Das Filtrat strömt über die Steigrohre 16 in den oberen Filtratraum 6 und wird über den Filterauslaß 17 abgeführt. Die Filterkerzen 15 sind zweckmäßig in einem solchen Umfangsabstand zueinander angeordnet, daß sich auf ihnen ein Filterkuchen von einer Stärke von etwa 30 mm bis 40 mm aufbauen läßt. Bei Erreichen der vorgegebenen Filterkuchenstärke erfolgt die Entleerung des Filtergehäuses bei gleichzeitiger Trocknung des Filterkuchens. Zu diesem Zweck wird über den Druckgasanschluß 23 und den von der Ringnut 22 gebildeten Ringkanal im oberen Bereich das Druckgas (Druckluft) in das Filtergehäuse bzw. den Trüberaum 5 eingeleitet. Das einströmende Druckgas entleert den Filter über den Filtereinlaß 10 und den Filterauslaß 17 und trocknet gleichzeitig den an den Filterkerzen 15 haftenden Filterkuchen auf eine gewisse Restfeuchte. Zum Austrag des getrockneten Filterkuchens wird die Absperrklappe 9 geöffnet, d.h. in die in Fig. 1 gestrichelt angedeutete Öffnungsposition geschwenkt. Gleichzeitig wird die Klopfvorrichtung 24 durch gesteuerte Druckluftbeaufschlagung des Klopfantriebes 25 in Betrieb gesetzt, so daß der Klopfer 26 von oben gegen die Trennwandplatte 4 schlägt, die dabei gegen die Rückstellkraft der Federelemente 21 periodisch von der Sitzfläche 19 abgehoben und beim Rückhub des Klopfers 26 durch die Federelemente wieder gegen die Sitzfläche 19 zurückgestellt wird. Durch die der Trennwandplatte 4 axial zu den Filterkerzen erteilten Schläge wird der getrocknete Filterkuchen an den Filterkerzen 15 gelöst, so daß er im Filtergehäuse 1 nach unten fällt und über die große Austragsöffnung 7 z.B. in einen Container oder in ein Fördermittel ausgetragen wird.

Es ist erkennbar, daß die vom Klopfer 26 auf die Trennwandplatte 4 ausgeübten Schlagimpulse über die von den Federelementen 21 gebildete Federvorrichtung schon innerhalb des Filtergehäuses stark gedämpft werden. Dies bietet die Möglichkeit, den gesamten Filterapparat ohne die Verwendung der herkömmlichen elastischen Dämpfungsmittel starr zu verlagern, z.B. an den am Filtergehäuse 1 außenseitig angeordneten Lagerteilen 32. Nach erfolgtem Filterkuchenaustrag und Abschalten der Klopfvorrichtung 24 stellen die Federelemente 21 die Trennwandplatte 4 wieder in die Schließlage gegen die Sitzfläche 19 zurück, wodurch die Abdichtung zwischen Trüberaum 5 und Filtratraum 6 hergestellt wird. Wie erwähnt, sind der Ein- und Auslaß am Filtergehäuse 1 so gestaltet, daß nach dem Entleeren des Filters ein Rücklaufen der Flüssigkeit nicht möglich ist. Die beschriebene Schrägstellung der Filteraustragsöffnung 7 begünstigt bei der Druckgasbeaufschlagung die vollständige Restentleerung des Filtergehäuses. Durch die große Freihöhe der Filterkerzen 15 oberhalb der Austragsöffnung 7 und der Absperrklappe 9 ist ein ordnungsgemäßer Filterkuchenaustrag auch dann möglich, wenn der getrocknete Filterkuchen beim Abklopfen nicht in Teile zerfällt, sondern als schlauchförmiger Filterkuchenstrumpf nach unten von den Filterkerzen abrutscht und in den Austrag gelangt. Durch den Klopfer 26 wird im Filterbetrieb die Gehäusedurchführung 27 zuverlässig verschlossen bzw. statisch abgedichtet, so daß auf die Verwendung von dynamisch beanspruchten Stößeldichtungen innerhalb der Gehäusedurchführung verzichtet werden kann.

Die Rückstellung der Trennwandplatte 4 gegen die Sitzfläche 19 erfolgt zweckmäßig gedämpft, so daß auch insoweit Schläge vermieden werden. Diese Dämpfung läßt sich in einfacher Weise durch gedrosselte Rückstellung des Klopfers in die Schließlage, d.h. durch gedrosselte Abhebung des Klopfers von der Trennwandplatte 4 erreichen, indem bei der Aufwärtsbewegung des Klopfers die Druckluftableitung aus dem betreffenden Zylinderraum des den Klopfantrieb bildenden Druckluftzylinders gedrosselt wird.

Im übrigen empfiehlt es sich, den Druckfilter so auszulegen, daß an den Filterkerzen mit einer Anströmgeschwindigkeit der Trübe von 40 - 100 m/h gefiltert wird. Dies führt nicht nur zu einer kompakten Bauweise des Druckfilters, sondern auch zu einer für die Filterwirkung günstigen raschen Anfangsbelegung der Filterkerzen.

## Patentansprüche

1. Kerzendruckfilter für die Flüssigkeitsfiltrierung, insbesondere für Kühlschmiermittel, mit einem das Filtergehäuse (1) in einen unteren, den Filtereinlaß aufweisenden Trüberaum (5) und einen oberen, den Filterauslaß aufweisenden Filtratraum (6) trennenden elastisch gelagerten Trennwandplatte (4), an der die Filterkerzen (15) mit ihren oberen Enden hängend angeschlossen sind, mit einem Druckgasanschluß (23) zum Einleiten eines den Filterkuchen an den Filterkerzen trocknenden Druckgases, mit einer am Boden des Filtergehäuses angeordneten, durch eine Absperrklappe (9) verschließbaren Austragsöffnung (7) für den getrockneten Filterkuchen, und mit einer am Kopf des Filtergehäuses angeordneten, eine Gehäusedurchführung (27) durchfassenden Klopfvorrichtung (24) zum Ablösen des getrockneten Filterkuchens von den Filterkerzen (15), die aus einem von einem Klopfantrieb (25) betätigten, gegen die Trennwandplatte wirkenden Klopfer (26) besteht, **dadurch gekennzeichnet, daß** der Klopfer (26) als ein vom Betriebsdruck im Filtergehäuse (1) in Schließrichtung beaufschlagtes, die Gehäusedurchführung (27) am Kopf des Filtergehäuses (1) verschließendes Verschlußorgan ausgebildet ist, wobei er in seiner Schließlage von der Trennwandplatte (4) abgehoben ist.

2. Kerzendruckfilter nach Anspruch 1, **dadurch gekennzeichnet, daß** das Filtergehäuse (1) als Druckgehäuse für einen Mindest-Betriebsdruck von 8 bis 10 bar ausgeführt ist.

3. Kerzendruckfilter nach Anspruch 1 oder 2, **dadurch gekennzeichnet, daß** an der Unterseite der Trennwandplatte (4) eine diese am Umfang gegen eine Sitzfläche (19) des Filtergehäuses dichtend anstellende Federvorrichtung angeordnet ist.

4. Kerzendruckfilter nach Anspruch 3, **dadurch gekennzeichnet, daß** die Federvorrichtung aus im Umfangsabstand zueinander angeordneten, an der Innenseite des Filtergehäuses (1) abgestützten Federelementen (21), vorzugsweise in Gestalt von Federstößeln, besteht.

5. Kerzendruckfilter nach Anspruch 3 oder 4, **dadurch gekennzeichnet, daß** die Trennwandplatte (4) am Umfang einen sich gegen die konische Sitzfläche (19) legenden O-Ring (20) trägt.

6. Kerzendruckfilter nach einem der Ansprüche 1 bis 5, **dadurch gekennzeichnet, daß** der Klopfer (26) an seiner Unterseite einen nachgiebigen Belag (31), vorzugsweise in Gestalt einer Gummi- oder Kunststoffplatte, trägt.

7. Kerzendruckfilter nach einem der Ansprüche 1 bis 6, **dadurch gekennzeichnet, daß** der Klopfer (26) an seiner Oberseite einen Dichtring (29) trägt, mit dem er sich gegen eine die Gehäusedurchführung (27) umschließende Sitzfläche (30) dichtend anlegt.

8. Kerzendruckfilter nach einem der Ansprüche 1 bis 7, **dadurch gekennzeichnet, daß** der Klopfantrieb (25) aus einem Druckluftzylinder besteht, mit dessen die Gehäusedurchführung (27) durchgreifender Kolbenstange (28) der Klopfer (26) verbunden ist.

9. Kerzendruckfilter nach einem der Ansprüche 1 bis 8, **dadurch gekennzeichnet, daß** der Kopf des Filtergehäuses (1) aus einem den Filtratraum (6) mit dem Filterauslaß (17) und der Gehäusedurchführung (27) für die Klopfvorrichtung (24) sowie die Sitzfläche (19) umfassenden Gußteil besteht.

10. Kerzendruckfilter nach einem der Ansprüche 1 bis 9, **dadurch gekennzeichnet, daß** die Druckgaszuführung aus einer unterhalb der Sitzfläche (19) angeordneten, die auf der Sitzfläche (19) liegende Trennwandplatte (4) umschließende Gehäusewand-Ringnut (22) mit den Druckgasanschluß bildende Anschlußbohrung (23) besteht.

11. Kerzendruckfilter nach einem der Ansprüche 1 bis 10, **dadurch gekennzeichnet, daß** der Filterauslaß (17) an seiner Unterseite (bei 18) tiefer liegt als die Oberseite der auf der Sitzfläche (19) liegenden Trennwandplatte (4).

12. Kerzendruckfilter nach einem der Ansprüche 1 bis 11, **dadurch gekennzeichnet, daß** die Filterkerzen (15) eine Länge aufweisen, die höchstens das Acht- bis Zehnfache ihres Durchmessers beträgt.

13. Kerzendruckfilter nach einem der Ansprüche 1 bis 12, **dadurch gekennzeichnet, daß** in den Filterkerzen (15) Steigrohre (16) angeordnet sind, deren Durchmesser so bemessen ist, daß der Querschnitt des zwischen der Filterkerze und dem Steigrohr liegenden Ringspaltes zumindest angenähert dem Innenquerschnitt des Steigrohres (16) entspricht.

14. Kerzendruckfilter nach einem der Ansprüche 1 bis 13, **dadurch gekennzeichnet, daß** die unteren Enden der Filterkerzen (15) in einem Abstand zu der Austragsöffnung (7) angeordnet sind, der mindestens gleich ihrer Länge ist.

15. Kerzendruckfilter nach einem der Ansprüche 1 bis 14, **dadurch gekennzeichnet, daß** die Austragsöffnung (7) unter einem spitzen Winkel zur Filtergehäuseachse geneigt ist.

16. Kerzendruckfilter nach einem der Ansprüche 1 bis 15, **dadurch gekennzeichnet, daß** das Filtergehäuse (1) sich zu der Austragsöffnung (7) und der Absperrklappe (9) hin konisch verjüngt, und daß die Absperrklappe (9) in einem zylindrischen Teil (14) der Austragsöffnung um eine mittlere Schwenkachse (8) schwenkbar gelagert ist.

17. Kerzendruckfilter nach einem der Ansprüche 1 bis 16, **dadurch gekennzeichnet, daß** die Filterkerzen (15) auf einem oder auf mehreren konzentrischen Teilkreisen in Umfangsabständen zueinander angeordnet sind.

18. Kerzendruckfilter nach einem der Ansprüche 1 bis 17, **dadurch gekennzeichnet, daß** der unmittelbar über der Absperrklappe (9) angeordnete, gegen die Absperrklappe gerichtete Filtereinlaß (10) in unteren Bereich eine Buckelauswölbung (12) aufweist.

19. Kerzendruckfilter nach einem der Ansprüche 1 bis 18, **dadurch gekennzeichnet, daß** das die Austragsöffnung (7) und den Filtereinlaß (10) bildende Fußteil des Filtergehäuses (1) als einstückiges Gußteil ausgeführt ist.

20. Kerzendruckfilter nach einem der Ansprüche 1 bis 19, **dadurch gekennzeichnet,** daß er für Anströmgeschwindigkeit an den Filterkerzen (15) von 40 - 100 m/h ausgelegt ist.

21. Kerzendruckfilter nach einem der Ansprüche 1 bis 20, **dadurch gekennzeichnet,** daß die Trennwandplatte (4) in ihrer Hubbewegung gegen die Sitzfläche (19) gedämpft ist.

22. Kerzendruckfilter nach Anspruch 21, **gekennzeichnet durch** eine gedrosselte Druckluftableitung aus dem Zylinderraum des als Klopfantrieb (24) vorgesehenen Druckluftzylinders (25) beim Aufwärtshub des Klopfers (26).

## Claims

1. Multiple-tube pressure filter for liquid filtration, especially for cooling lubricants, with an elastically mounted partition plate (4) which divides the filter housing (1) into a lower sludge space (5) having the filter inlet and an upper filtrate space (6) having the filter outlet and to which the filter tubes (15) are connected in a suspended manner at their upper ends, with a compressed-gas connection (23) for introducing a compressed gas drying the filter cake on the filter tubes, with a discharge orifice (7) for the dried filter cake, the said discharge orifice being arranged at the bottom of the filter housing and being capable of being closed by means of a shut-off flap (9), and with a knocking device (24) arranged at the head of the filter housing and passing through a housing lead-through (27) and intended for removing the dried filter cake from the filter tubes (15), the said knocking device consisting of a knocker (26) actuated by a knocking drive (25) and acting against the partition plate, characterized in that the knocker (26) is designed as a closing member which is loaded in the closing direction by the operating pressure in the filter housing (1) and which closes the housing lead-through (27) at the head of the filter housing (1), the said knocker, when in its closing position, being lifted off from the partition plate (4).

2. Multiple-tube pressure filter according to Claim 1, characterized in that the filter housing (1) is designed as a pressure housing for a minimum operating pressure of 8 to 10 bar.

3. Multiple-tube pressure filter according to Claim 1 or 2, characterized in that there is arranged on the underside of the partition plate (4) a spring device which applies the latter sealingly along the circumference, against a seat face (19) of the filter housing.

4. Multiple-tube pressure filter according to Claim 3, characterized in that the spring device consists of spring elements (21), preferably in the form of spring tappets, which are arranged at a circumferential distance from one another and which are supported on the inside of the filter housing (1).

5. Multiple-tube pressure filter according to Claim 3 or 4, characterized in that the partition plate (4) carries, on the circumference, an O-ring (20) which comes to bear against the conical seat face (19).

6. Multiple-tube pressure filter according to one of Claims 1 to 5, characterized in that the knocker (26) carries, on its underside, a flexible covering (31), preferably in the form of a rubber or plastic plate.

7. Multiple-tube pressure filter according to one of Claims 1 to 6, characterized in that the knocker (26), carries, on its top side, a sealing ring (29), with which it comes to bear sealingly against a seat face (30) surrounding the housing lead-through (27).

8. Multiple-tube pressure filter according to one of Claims 1 to 7, characterized in that the knocking drive (25) consists of a compressed-air cylinder, the knocker (26) being connected to the cylinder piston rod (28) which passes through the housing lead-through (27).

9. Multiple-tube pressure filter according to one of Claims 1 to 8, characterized in that the head of the filter housing (1) consists of a casting which comprises the filtrate space (6) having the filter outlet (17), the housing lead-through (27) for the knocking device (24) and the seat face (19).

10. Multiple-tube pressure filter according to one of Claims 1 to 9, characterized in that the compressed-gas supply consists of an annular housing-wall groove (22) which is arranged underneath the seat face (19) and surrounds the partition plate (4) resting on the seat face (19) and which has a connecting bore (23) forming the compressed-gas connection.

11. Multiple-tube pressure filter according to one of Claims 1 to 10, characterized in that the filter outlet (17) is lower on its underside (at 18) than the top side of the partition plate (4) resting on the seat face (19).

12. Multiple-tube pressure filter according to one of Claims 1 to 11, characterized in that the filter tubes (15) have a length which is at most eight to ten times their diameter.

13. Multiple-tube pressure filter according to one of Claims 1 to 12, characterized in that there are arranged in the filter tubes (15) risers (16) which have a diameter dimensioned in such a way that the cross-section of the annular gap located between the filter tube and the riser corresponds at least approximately to the inner cross-section of the riser (16).

14. Multiple-tube pressure filter according to one of Claims 1 to 13, characterized in that the lower ends of the filter tubes (15) are arranged at a distance from the discharge orifice (7) which is at least equal to their length.

15. Multiple-tube pressure filter according to one of Claims 1 to 14, characterized in that the discharge orifice (7) is inclined at an acute angle to the axis of the filter housing.

16. Multiple-tube pressure filter according to one of Claims 1 to 15, characterized in that the filter housing (1) tapers conically towards the discharge orifice (7) and the shut-off flap (9), and in that the shut-off flap (9) is mounted pivotally about a central pivot axis (8) in a cylindrical part (14) of the discharge orifice.

17. Multiple-tube pressure filter according to one of Claims 1 to 16, characterized in that the filter tubes (15) are arranged at circumferential distances from one another on a reference circle or on a plurality of concentric reference circles.

18. Multiple-tube pressure filter according to one of Claims 1 to 17, characterized in that the filter inlet (10) arranged immediately above the shut-off flap (9) and directed towards the shut-off flap has a bulge (12) in the lower region.

19. Multiple-tube pressure filter according to one of Claims 1 to 18, characterized in that the foot part of the filter housing (1) is designed as an integral casting, the said foot part forming the discharge orifice (7) and the filter inlet (10).

20. Multiple-tube pressure filter according to one of Claims 1 to 19, characterized in that it is designed for an onflow velocity at the filter tubes (15) of 40 - 100 m/h.

21. Multiple-tube pressure filter according to one of Claims 1 to 20, characterized in that the lifting movement of the partition plate (4) against the seat face (19) is damped.

22. Multiple-tube pressure filter according to Claim 21, characterized by a throttled offtake of compressed air from the cylinder space of the compressed-air cylinder (25), provided as a knocking drive (24), during the upward stroke of the knocker (26).

## Revendications

1. Filtre à bougies pour fonctionnement sous pression, destiné à la filtration de liquide en particulier pour des lubrifiants de refroidissement, comportant une plaque de paroi de séparation (4) montée élastiquement et séparant le carter de filtration (1) en une enceinte trouble (5) inférieure présentant l'admission au filtre et une enceinte de filtrat supérieure présentant l'évacuation du filtre, plaque de paroi de séparation sur laquelle les bougies filtrantes (15) sont raccordées accrochées par leurs extrémités supérieures, avec un raccordement de gaz sous pression (23) destiné à introduire un gaz sous pression séchant le gâteau de filtrage se trouvant sur les bougies filtrantes, avec une ouverture d'évacuation disposée sur le fond du carter de filtre, pouvant être obturé au moyen d'un clapet d'obturation (9) et par exemple ouverture d'évacuation (7) et, pour le gâteau de filtrage séché et avec un dispositif de frappe (24) disposé en haut du carter de filtre, traversant un passage de carter (13) pour désolidariser le gâteau de filtrage séché et le dégager des bougies filtrantes (15), constitué d'un dispositif de frappe (26) actionné par un entraînement de frappe (25) et agissant contre la plaque de paroi de séparation, caractérisé par le fait que le dispositif de frappe (26) est réalisé sous la forme d'un organe obturateur sollicité dans la direction de la fermeture par la pression de fonctionnement régnant dans le carter de filtre (1) et obturant la traversée de carter (27) placée en partie haute du carter de filtre (1), en étant soulevé de la plaque de paroi de séparation (4) lorsqu'il se trouve dans sa position de fermeture.

2. Filtre à bougies pour fonctionnement sous pression selon la revendication 1, caractérisé en ce que le carter de filtre (1) est réalisé sous forme de carter à pression pour une pression de fonctionnement minimal de 8 à 10 bars.

3. Filtre à bougies pour fonctionnement sous pression selon la revendication 1 ou 2, caractérisé en ce que en face inférieure de la plaque de paroi de séparation (4) est disposé un dispositif à ressort appliquant avec effet d'étanchéité la plaque de paroi de séparation sur la périphérie contre une surface de siège (19) du carter de filtre.

4. Filtre à bougies pour fonctionnement sous pression selon la revendication 3, caractérisé en ce que le dispositif à ressort est constitué d'éléments de ressort (21) disposés avec un espacement périphérique les uns par rapport aux autres, soutenus sur la face inférieure du carter de filtre (1), de préférence ayant la forme de poussoir à ressort.

5. Filtre à bougies pour fonctionnement sous pression selon la revendication 3 ou 4, caractérisé en ce que la plaque de paroi de séparation (4) porte sur la périphérie un joint torique (20) reposant contre la surface de siège (19) conique.

6. Filtre à bougies pour fonctionnement sous pression selon l'une des revendications 1 à 5, caractérisé en ce que le dispositif de frappe (26) porte sur sa face inférieure une garniture (31) déformable de préférence se présentant sous la forme d'une plaque en caoutchouc ou en matière synthétique.

7. Filtre à bougies pour fonctionnement sous pression selon l'une des revendications 1 à 6, caractérisé en ce que le dispositif de frappe (26) porte, sur sa face supérieure, une plaque d'étanchéité (29), à l'aide de laquelle il appuie avec étanchéité contre une surface de siège (30) entourant la traversée de carter (27).

8. Filtre à bougies pour fonctionnement sous pression selon l'une des revendications 1 à 7, caractérisé en ce que l'entraînement de frappe (25) est constitué d'un vérin à air comprimé, à la tige de piston (28), traversant le passage de carter (27), duquel le dispositif de frappe (26) est relié.

9. Filtre à bougies pour fonctionnement sous pression selon l'une des revendications 1 à 8, caractérisé en ce que la tête du carter de filtre (1) est constitué d'une partie moulée enclosant l'enceinte à filtrat (6) avec l'évacuation de filtre (17) et le passage de carter (27) destiné au dispositif de frappe (24) ainsi que la surface de siège (19).

10. Filtre à bougies pour fonctionnement sous pression selon l'une des revendications 1 à 9, caractérisé en ce que l'amenée de gaz sous pression est constituée d'un perçage de raccordement (23), disposé au-dessous de la surface de siège (19), constituant, avec le raccordement de gaz sous pression, la rainure annulaire (22) de paroi de carter qui entoure la plaque de paroi de séparation (4) placée sur la surface de siège (19).

11. Filtre à bougies pour fonctionnement sous pression selon l'une des revendications 1 à 10, caractérisé en ce que l'évacuation du filtre (17) est situé sur sa face inférieure (en 18) plus profondément que la face supérieure de la plaque de paroi de séparation (4) placée sur la surface de siège (19).

12. Filtre à bougies pour fonctionnement sous pression selon l'une des revendications 1 à 11, caractérisé en ce que les bougies filtrantes (15) ont une longueur qui est au maximum de l'octuple au décuple de son diamètre.

13. Filtre à bougies pour fonctionnement sous pression selon l'une des revendications 1 à 12, caractérisé en ce que dans les bougies filtrantes (15) sont disposés des tubes montant (16) dont le diamètre est tel que la section transversale de l'interstice annulaire existant entre la bougie filtrante et le tube montant correspond au moins à peu près à la section transversale intérieure du tube montant (16).

14. Filtre à bougies pour fonctionnement sous pression selon l'une des revendications 1 à 13, caractérisé en ce que les extrémités inférieures des bougies filtrantes (15) sont disposées à une distance de l'ouverture d'évacuation (7) qui est au moins égale à leur longueur.

15. Filtre à bougies pour fonctionnement sous pression selon l'une des revendications 1 à 14, caractérisé en ce que l'ouverture d'évacuation (7) est inclinée sous un angle aigu par rapport à l'axe du carter de filtre.

16. Filtre à bougies pour fonctionnement sous pression selon l'une des revendications 1 à 15, caractérisé en ce que le carter de filtre (1) va en s'effilant de façon conique en direction de l'ouverture d'évacuation (7) et du clapet d'obturation (9), et en ce que le clapet d'obturation (9) est monté pivotant autour d'un axe de pivotement central (8), dans une partie (14) cylindrique de l'ouverture d'évacuation.

17. Filtre à bougies pour fonctionnement sous pression selon l'une des revendications 1 à 16, caractérisé en ce que les bougies filtrantes (15) sont disposées sur un ou plusieurs cercles partiels concentriques, avec des espacements périphériques les unes par rapport aux autres.

18. Filtre à bougies pour fonctionnement sous pression selon l'une des revendications 1 à 17, caractérisé en ce que l'entrée de filtre (10) disposée directement au-dessus du clapet d'obturation (9) et dirigée vers le clapet d'obturation présente un bombement en bosse (12) dans la zone inférieure.

19. Filtre à bougies pour fonctionnement sous pression selon l'une des revendications 1 à 18, caractérisé en ce que l'ouverture d'évacuation (7) et la partie pied formant l'entrée de filtre (10) du carter de filtre (1) sont réalisées sous forme de pièces moulées monobloc.

20. Filtre à bougies pour fonctionnement sous pression selon l'une des revendications 1 à 19, caractérisé en ce qu'il est conçu pour une vitesse d'arrivée d'écoulement sur les bougies filtrantes (15) de 40 à 100 m/h.

21. Filtre à bougies pour fonctionnement sous pression selon l'une des revendications 1 à 20, caractérisé en ce que le mouvement de course de la plaque de paroi de séparation (4) contre la surface de siège (19) est amorti.

22. Filtre à bougies pour fonctionnement sous pression selon la revendication 21, caractérisé par une conduite de dérivation d'air comprimé étranglée venant de l'espace cylindrique du cylindre d'aire comprimé (25) prévu comme entraînement de frappe (24), lors de la course de montée du dispositif de frappe (26).
